# EUROPEAN PATENT SPECIFICATION

(11) **EP 2 979 768 B1**
(45) Date of publication and mention of the grant of the patent: **25.10.2017**
(21) Application number: 14191700.5
(22) Date of filing: 04.11.2014
(51) Int. Cl.: B09B 1/00, B09B 3/00, B09C 1/00, E21C 41/32

(54) **METHOD OF RECLAIMING MINE EXCAVATIONS**
VERFAHREN ZUR RÜCKGEWINNUNG VON MINENAUSHUB
PROCÉDÉ DE RÉCUPÉRATION DES EXCAVATIONS MINIÈRES

(30) Priority: 28.07.2014 PL 40899914
(43) Date of publication of application: 03.02.2016
(73) Proprietor: Politechnika Lubelska, 20-618 Lublin (PL); Uniwersytet Przyrodniczy, 20-950 Lublin (PL)
(72) Inventor: Pawlowski, Artur, 20-710 Lublin (PL); Pawlowski, Lucjan, 20-710 Lublin (PL); Pawlowska, Malgorzata, 20-710 Lublin (PL); Kujawska, Justyna, 20-861 Lublin (PL); Cel, Wojciech, 97-300 Piotrków Trybunalski (PL); Baran, Stanislaw, 20-448 Lublin (PL); Wesolowski, Marian, 20-807 Lublin (PL); Zukowska, Grazyna, 20-282 Lublin (PL); Bik-Malodzinska, Marta, 39-340 Padew Narodowa (PL); Kwiatkowski, Zygmunt, 21-003 Ciecierzyn (PL)
(74) Representative: Kaminski, Piotr

(56) References cited:
- CN-A- 103 643 956
- RU-C1- 2 374 447
- US-A- 4 611 951
- Department Of The Army ET AL: "Army Troop Issue Subsistence Activity Operating Policies", , 19 December 2012 (2012-12-19), XP055233606, Retrieved from the Internet: URL:http://serc.osu.edu/sites/d6-serc.web/ files/uploads/CuttingsBenenficialUse.pdf [retrieved on 2015-12-03]
- Jeff Skousen ET AL: "Reclamation of Marcellus Shale Drilling Sites in West Virginia", , 27 July 2014 (2014-07-27), XP055233599, Retrieved from the Internet: URL:http://anr.ext.wvu.edu/r/download/1233 67 [retrieved on 2015-12-03]

## Description

The invention is a method of reclaiming excavations after the mineral resources exploitation.

The exploitation of mineral resources leads to creation of large excavations, which in turn lead to degradation of large areas of land. Often, if the geological structure permits it, artificial bodies of water are created in their place. However, such action is impossible if the structure is permeable and unable to keep the surface of water at an adequate level. While the top soil, which is void of utility, is removed prior to exploitation, it only comprises several percent of the excavation. It is insufficient amount to create a layer of soil which would allow vegetation to grow on the excavation.

The Polish patent number PL 53762 presented the method of reclaiming sand mining excavations which relies on spreading specially prepared rocky loam rich with montmorillonite, over the reclaimed area and mixing them afterwards. Sometimes, a stabilizing agent in the form of agricultural lime is added to prevent montmorillonite from moving deeper.

The Polish patent number PL 202123 demonstrated the reclamation method of surfaces degraded by deep mining which relies on sealing a part of excavation and flooding it with highly mineralized water extracted from the depths of a mine and purified of pollution and suspended solids.

The patent number US 5607494 showed the method of preparing a mixture containing 30% of peat, 10-30% of degraded soil, 40-60% of sewage sludge and 25-44% of paper pulp, which was named as "artificial soil" and that is suitable for reclamation of degraded areas, including excavations.

Another method was presented in a patent number US 6846858, in which artificial soil is composed of a mixture of cellulose particles and adhesives. The cellulose particles may be selected from wood chips and sawdust.

The method of preparing artificial soil for reclamation presented in the patent number US 5451242 makes use of synthetic apatite mixed with zeolite. Such mixture contains nutrients, i.e. compounds of nitrogen and potassium, which are conducive to the growth of a plant root system.

An alternative artificial soil mixture was presented in the patent number US 6537340, which employs 30-50% of sludge from water treatment generated by treating water with aluminium salt coagulant, mixed with topsoil.

The patent number US 6413017 describes a method which relies on mixing biomass with carbonates, hydroxides, oxides of calcium and magnesium that improve the structure of degraded soil, enabling plants to grow, while the patent number US 6302936 demonstrates the method of mixing: 5-95% of cellulose, 0,5-50% of bio-solids, 0,1-10% of calcium in the form of salts or calcium hydroxide, 0,1-5% of charcoal and 0,5-4% of ammonium nitrate or sulfate.

The US 4611951 discloses an improved process for reclamation of excavated mine sites and otherwise useless land using waste slimes and tailings obtained from the benefication of ore. Overburden, i.e., the soil and rock which generally cover the valuable ore deposit, is used in the construction of dikes across the excavated or depleted mine site.

The CN 103642956 presents a method for reclamation of mines by filling the area with gangue and comprises the following steps of investigating and analyzing lumpiness structure characteristics of filling and reclamation materials, namely coal gangues and designing the surface soil covering thickness according to the lumpiness structure characteristics of the coal gangues.

The drawback of these solutions is the high cohesion of artificial soil, which hinders air diffusion and consequently hampers the growth of plant root system. Moreover, sawdust and other organic materials are unavailable in sufficient amounts. There are also concerns that they eventually will decompose, thus rendering the soil structure improvement temporary.

While searching for adequate reclamation materials, attention was paid to large amounts of mining waste generated in the form of coal bed rocks, as well as drill cuttings made during the search of shale gas.

The principle of reclaiming excavations after mineral resource exploitation is filling the excavation with a mixture of coal bed rocks, a mixture of drill cuttings and ash to the level of 1-2 m below the surface of ground. Afterwards, a 1-2 m layer of artificial soil is created from cuttings separated from used drilling liquid, sewage treatment plant sludge and top soil accumulated during the preparation for exploitation of mineral resource, wherein in the artificial soil drill cuttings are present in the amount of 10-30%, preferably 20%, sludge is present in the amount of 20-40%, preferably 30%, and top soil is present in the amount of 30-60% preferably 40%.

The advantage of the invention is filling the degraded area with a layer of artificial soil in which vegetation is planted. Moreover, the method allows utilisation of coal bed rocks which pose problems with utilization.

The invention is presented in the example below.

### Example

An excavation having dimensions of 10 x 20 m and depth of 4,5 m was filled with a 3 m layer comprising 65% of coal bed rocks, 25% of bituminous coal ash produced by combustion and 10% shale gas drill cuttings. Then, 300 m³ of mixture comprising 60 m³ of drill cuttings, 90 m³ of anaerobic digestion sludge and 150 m³ of coal bed rocks was prepared. The mixture was used to prepare 1,5 m layer of artificial soil, with pine and birch saplings planted therein afterwards.

## Claims

1. A method of reclaiming excavations after the mineral resources excavation **characterized by** filling the excavation with a mixture of coal bed rocks, drill cuttings and ash to a level of 1 to 2 m below ground, after which a 1-2-metre layer of artificial soil is created from drill cuttings separated from drill liquid, sewage treatment plant sludge and top soil accumulated during the preparation for exploitation, wherein in the artificial soil drill cuttings are present in the amount of 10-30%, preferably 20%, sewage treatment plant sludge is present in the amount of 20-40%, preferably 30%, and top soil accumulated during the preparation for exploitation is present in the amount of 30-60%, preferably 40%.

## Patentansprüche

1. Rekultivierungsverfahren von Abbauräumen nach der Gewinnung von Mineralrohstoffen, **gekennzeichnet dadurch, dass** der entstandene Abbauraum mit einer Mischung von taubem Gestein und einer Mischung von Bohrgut und Asche bis zu einem Niveau von 1 bis 2 m unter dem Bodenniveau aufgefüllt wird, und anschließend eine 1-2 Meter tiefe Schicht aus einer Mischung von aus abgenutzten Bohrschlämmen abgeschiedenen Bohrresten, sowie Sedimenten aus Biokläranlagen und aus bei den Vorarbeiten zum Abbau der Mineralrohstoffe gesammelten Abraumstoffe gebildet wird, wobei die Bohrreste 10 bis 30% und vorzugsweise 20%, die Abwassersedimente 20 bis 40%, und vorzugsweise 30% und die Abraumstoffe 30 bis 50% und vorzugsweise 40% des künstlichen Bodens darstellen.

## Revendications

1. Une méthode de récupération des excavations après l'exploitation des ressources minérales, **caractérisée en ce que** l'excavation résultante est d'abord remplie d'un mélange de roches trouvées près des gisements de charbon avec un mélange de poussières de forage et de cendre jusqu'à niveau de 1 à 2 m au-dessous du niveau du sol, ensuite, une couche de 1-2 mètres de sol artificiel est formée à partir d'un mélange de poussières de forage retirées des fluides de forage usés, de boues d'une station d'épuration biologique et de matériaux issus des surcouches collectées lors de la préparation à l'exploitation des ressources minérales, où dans le sol artificiel les poussières de forage sont comprises entre 10 et 30%, de préférence 20%, les boues d'épuration entre 20 et 40%, de préférence 30%, et le matériau issu des surcouches entre 30 et 60%, de préférence 40%.
